# EUROPEAN PATENT APPLICATION

(11) **EP 4 797 715 A1**
(43) Date of publication of application: **26.08.2026**
(21) Application number: 25211888.0
(22) Date of filing: 29.10.2025
(51) Int. Cl.: H04N 23/62, H04N 23/661

(54) **IMAGE PROCESSING METHOD, WEARABLE DEVICE, ELECTRONIC DEVICE AND STORAGE MEDIUM**

(30) Priority: 20.02.2025 CN 202510190068
(71) Applicant: Beijing Zitiao Network Technology Co., Ltd., Beijing 100190 (CN)
(72) Inventor: LI, Haoqian, Beijing, 100028 (CN); CAI, Wei, Beijing, 100028 (CN); XIA, Qing, Beijing, 100028 (CN); WANG, Huichao, Beijing, 100028 (CN); LI, Mingyang, Beijing, 100028 (CN); LI, Jun, Beijing, 100028 (CN)
(74) Representative: Isarpatent

(57) **Abstract**

Embodiments of the present disclosure provide an image processing method, a wearable device (11), an electronic device, and a storage medium. The method includes: determining a target resolution in response to a shooting instruction; and controlling a camera to shoot a first image (a1) with the target resolution for a current environment, where the target resolution is a first resolution or a second resolution, and the first resolution is greater than the second resolution. In the present disclosure, the wearable device (11) may be controlled to shoot images with different resolutions, so that the wearable device (11) may be applied to various scenarios.

## Description

This application claims priority to Chinese Patent Application No. 202510190068.9 filed on February 20, 2025, the disclosure of which is incorporated herein by reference in its entirety as part of the present application.

### TECHNICAL FIELD

Embodiments of the present disclosure relate to the field of computer technologies, and in particular, to an image processing method, a wearable device, an apparatus, an electronic device, and a storage medium.

### BACKGROUND

A wearable device is an electronic device worn on a user, and the wearable device is generally configured to provide multiple functions such as audio and/or video.

At present, the wearable device supports collecting an image and uploading the image to a server to implement visual inquiry, to satisfy various visual inquiry scenarios of users, for example, inquiring about a vehicle logo, a clothing brand, celebrity information, real-time menu translation, and instant translation when reading foreign publications. However, currently, the wearable device has a problem of a single resolution of the collected image, which in turn affects the use of the wearable device.

### SUMMARY

According to a first aspect, an embodiment of the present disclosure provides an image processing method, where the method is applied to a wearable device, the wearable device includes a camera, and the method includes: determining a target resolution in response to a shooting instruction when a user wears the wearable device; and controlling the camera to shoot a first image with the target resolution for a current environment, where the target resolution is a first resolution or a second resolution, and the first resolution is greater than the second resolution.

According to a second aspect, an embodiment of the present disclosure provides an image processing method, where the method is applied to a target device, and the method includes: receiving a voice instruction sent by a wearable device; recognizing a shooting intention of the voice instruction to determine a target resolution, where the target resolution is a first resolution or a second resolution, and the first resolution is greater than the second resolution; and sending a shooting instruction to the wearable device, where the shooting instruction includes the target resolution, and the shooting instruction is used to control the wearable device to shoot a first image with the target resolution.

According to a third aspect, an embodiment of the present disclosure provides an image processing method, where the method is applied to a target device, and the method includes: receiving a voice instruction sent by a wearable device; recognizing a shooting intention of the voice instruction to determine a target resolution; and sending a transmission instruction to the wearable device in a case where the wearable device shoots a first image with a first resolution and a second image with a second resolution, where the transmission instruction is used to instruct the wearable device to send a first target image to the target device, where if the target resolution is the first resolution, the first target image is the first image, and if the target resolution is the second resolution, the first target image is the second image.

According to a fourth aspect, an embodiment of the present disclosure provides a wearable device, where the wearable device includes a camera, and further includes: a determination unit, configured to determine a target resolution in response to a shooting instruction when a user wears the wearable device; and a control unit, configured to control the camera to shoot a first image with the target resolution for a current environment, where the target resolution is a first resolution or a second resolution, and the first resolution is greater than the second resolution.

According to a fifth aspect, an embodiment of the present disclosure provides an image processing apparatus, where the apparatus is applied to a target device, and the apparatus includes: a receiving unit, configured to receive a voice instruction sent by a wearable device; a recognition unit, configured to recognize a shooting intention of the voice instruction to determine a target resolution, wherein the target resolution is a first resolution or a second resolution, and the first resolution is greater than the second resolution; and a sending unit, configured to send a transmission instruction to the wearable device, wherein the shooting instruction comprises the target resolution, and the shooting instruction is used to control the wearable device to shoot a first image with the target resolution.

According to a sixth aspect, an embodiment of the present disclosure provides an image processing apparatus, where the apparatus is applied to a target device, and the apparatus includes: a receiving unit, configured to receive a voice instruction sent by a wearable device; a recognition unit, configured to recognize a shooting intention of the voice instruction to determine a target resolution; and a sending unit, configured to send a transmission instruction to the wearable device in a case where the wearable device shoots a first image with a first resolution and a second image with a second resolution, where the transmission instruction is used to instruct the wearable device to send a first target image to the target device, where if the target resolution is the first resolution, the first target image is the first image, and if the target resolution is the second resolution, the first target image is the second image.

According to a seventh aspect, an embodiment of the present disclosure provides an electronic device, including: a processor and a memory; the memory stores a computer-executable instruction; and the processor executes the computer-executable instruction stored in the memory, to cause the at least one processor to execute various possible image processing methods according to the first aspect, the second aspect, or the third aspect.

According to an eighth aspect, an embodiment of the present disclosure provides a computer-readable storage medium, where a computer-executable instruction is stored in the computer-readable storage medium, and when the computer-executable instruction is executed by a processor, various possible image processing methods according to the first aspect, the second aspect, or the third aspect are implemented.

According to a ninth aspect, an embodiment of the present disclosure provides a computer program product, including a computer program, where when the computer program is executed by a processor, various possible image processing methods according to the first aspect, the second aspect, or the third aspect are implemented.

The image processing method provided in this embodiment is applied to a wearable device, and the wearable device includes a camera. When a user wears the wearable device, a target resolution is determined in response to a shooting instruction. The camera is controlled to shoot a first image with the target resolution for a current environment, where the target resolution is a first resolution or a second resolution, and the first resolution is greater than the second resolution. In the present disclosure, the wearable device may be controlled to shoot images with different resolutions, so that the wearable device may be applied to various scenarios.

### BRIEF DESCRIPTION OF DRAWINGS

In order to more clearly explain the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without paying creative efforts.
Fig. 1 is an example diagram of an application scenario of an image processing method provided by an embodiment of the present disclosure;
Fig. 2 is a first flowchart of an image processing method provided by an embodiment of the present disclosure;
Fig. 3 is a second flowchart of an image processing method provided by an embodiment of the present disclosure;
Fig. 4 is a third flowchart of an image processing method provided by an embodiment of the present disclosure;
Fig. 5 is a fourth flowchart of an image processing method provided by an embodiment of the present disclosure;
Fig. 6 is a fifth flowchart of an image processing method provided by an embodiment of the present disclosure;
Fig. 7 is a sixth flowchart of an image processing method provided by an embodiment of the present disclosure;
Fig. 8 is a structural block diagram of a wearable device provided by an embodiment of the present disclosure;
Fig. 9 is a first structural block diagram of an image processing apparatus provided by an embodiment of the present disclosure;
Fig. 10 is a second structural block diagram of an image processing apparatus provided by an embodiment of the present disclosure; and
Fig. 11 is a schematic structural diagram of an electronic device provided by an embodiment of the present disclosure.

### DETAILED DESCRIPTION

In order to make the objectives, technical solutions, and advantages of the embodiments of the present disclosure clearer, the technical solutions in the embodiments of the present disclosure will be described clearly and comprehensively with reference to the drawings in the embodiments of the present disclosure. Obviously, the described embodiments are some embodiments of the present disclosure, rather than all the embodiments. All other embodiments obtained by a person of ordinary skill in the art based on the embodiments of the present disclosure without creative efforts shall fall within the protection scope of the present disclosure.

It may be understood that before the use of the technical solutions disclosed in the embodiments of the present disclosure, the target user shall be informed of the type, range of use, use scenarios, etc., of personal information involved in the present disclosure in an appropriate manner and the authorization of the target user shall be obtained in accordance with relevant laws and regulations.

For example, in response to reception of an active request from a user, prompt information is sent to the user to clearly inform the user that the requested operation will require access to and use of personal information of the user. As such, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may also include a selection control for the user to select whether to "agree" or "disagree" to provide the personal information to the electronic device.

It may be understood that the above process of notifying and obtaining the authorization of the target user is only illustrative and does not constitute a limitation on the implementations of the present disclosure, and other manners that satisfy the relevant laws and regulations may also be applied in the implementations of the present disclosure.

In related technologies, during visual inquiry, a user needs a wearable device to acquire an image and upload the image to a target device, and the target device invokes a visual inquiry algorithm to process the image to obtain reply content, and returns the reply content to the wearable device. The wearable device may only shoot images with a single resolution. If the resolution of the image is large, more transmission bandwidth will be consumed and a long delay will be caused. If the resolution of the image is small, it will affect the visual experience of the user, and the image with a small resolution may prevent accurate recognition of the detail content in the image.

In order to solve the above technical problem, the present disclosure provides an image processing method. In the method, when a user wears a wearable device, a target resolution is determined in response to a shooting instruction; and a camera is controlled to shoot a first image with a target resolution for a current environment, where the target resolution is a first resolution or a second resolution, and the first resolution is greater than the second resolution. In this manner, the wearable device may be controlled to shoot images with different resolutions, so that the wearable device may be applied to various scenarios.

It should be noted that the image processing method provided in the present disclosure may be applied to any wearable device. The image processing method provided in the embodiments of the present disclosure is described in detail below with reference to the drawings.

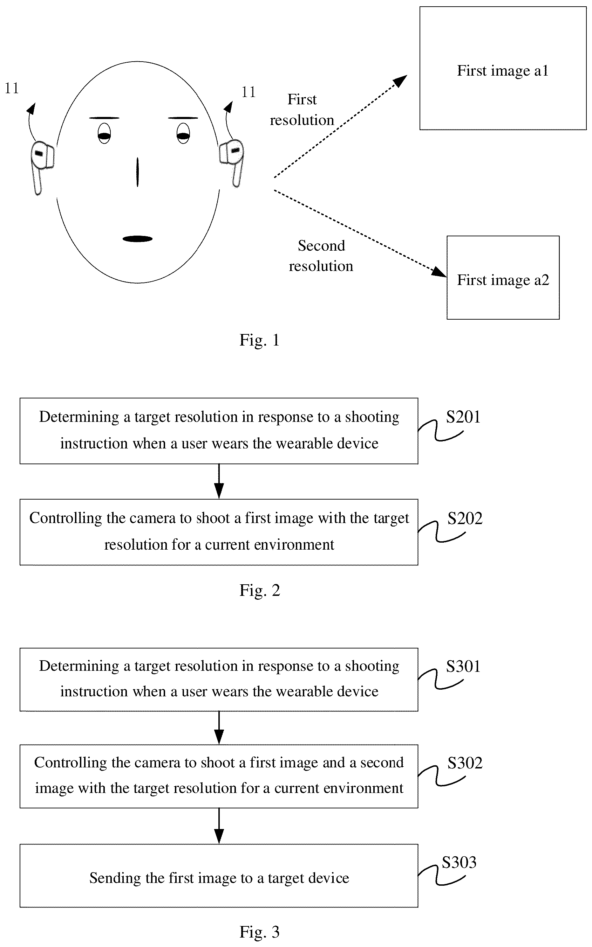

Fig. 1 is an example diagram of an application scenario of an image processing method provided by an embodiment of the present disclosure. As shown in Fig. 1, the wearable device is, for example, a head-mounted device 11. When the user wears the head-mounted device 11 on the head, the user's shooting instruction may be received, and the target resolution is determined based on the shooting instruction. If the target resolution is the first resolution, the first image a1 with the first resolution is shot, and if the target resolution is the second resolution, the first image a2 with the second resolution is shot.

Fig. 1 is only an exemplary application scenario, which may be used in any wearable device, and the present disclosure does not limit the type of the wearable device.

Fig. 2 is a flowchart of an image processing method provided by an embodiment of the present disclosure. The image processing method is applied to a wearable device, and may include the following steps.

S201, determining a target resolution in response to a shooting instruction when a user wears the wearable device.

In the present disclosure, the wearable device includes one of a head-mounted display, a headphone, or glasses. The head-mounted display is, for example, a VR (Virtual Reality) device, an XR (Extended Reality) device, an MR (Mixed Reality) device, an AR (Augmented Reality) device, or the like. The headphone is a headphone with a camera, and the glasses are glasses with a camera.

In the present disclosure, the target device is a device that deploys a model and/or a device that may display an image, and the target device may be a terminal device or a server. The wearable device and the target device may communicate wirelessly, for example, via wifi or Bluetooth, or may communicate wiredly, which is not limited herein.

In the present disclosure, the shooting instruction is a voice instruction or a physical operation instruction. The voice instruction is an instruction for triggering shooting through voice by the user. The physical operation instruction is an instruction for triggering shooting by the user through clicking on the wearable device with a limb.

The target resolution is a first resolution or a second resolution, and the first resolution is greater than the second resolution.

In an embodiment, the shooting instruction includes a voice instruction, and determining the target resolution in response to the shooting instruction includes: recognizing a shooting intention of the voice instruction in response to the voice instruction; determining the target resolution to be the first resolution if the shooting intention represents shooting a clear image; and determining the target resolution to be the second resolution if the shooting intention does not represent shooting a clear image.

It may be understood that the wearable device includes a speaker, and the user's voice instruction may be acquired through the speaker. In the present disclosure, the shooting intention of the voice instruction may be recognized on the wearable device side, or the shooting intention of the voice instruction may be recognized on the target device side.

Specifically, if the shooting intention of the voice instruction is recognized on the wearable device side, specifically, the wearable device recognizes the shooting intention of the voice instruction, and then the wearable device determines, based on the shooting intention, that the target resolution is the first resolution or the second resolution.

If the target device recognizes the shooting intention of the voice instruction, in one case, the wearable device receives the voice instruction, and sends the voice instruction to the target device; after recognizing the shooting intention of the voice instruction, the target device sends the shooting intention to the wearable device, and the wearable device determines, based on the shooting intention, that the target resolution is the first resolution or the second resolution. In another case, the wearable device receives the voice instruction, and sends the voice instruction to the target device; after recognizing the shooting intention of the voice instruction, the target device determines, based on the shooting intention, that the target resolution is the first resolution or the second resolution, and then sends the determined target resolution to the wearable device.

Further, recognizing the shooting intention of the voice instruction includes: recognizing whether the voice instruction includes a preset keyword, where the preset keyword is used to instruct to shoot a clear image; if yes, determining that the shooting intention of the voice instruction is to shoot a clear image; if no, performing shooting intention recognition on the voice instruction through a pre-trained recognition model to obtain the shooting intention of the voice instruction.

The preset keywords are, for example, "carefully", "seriously", "recognize", "text", "translation", "clear", and "distinct", etc. It may be seen that these preset keywords instruct to shoot a clear image, and only when a clear image is shot, the detail content in the image may be recognized. The preset keyword is also, for example, "take a photo". If the voice instruction includes "take a photo", it indicates that the user needs to browse the image but not recognize the image, so instructing to shoot a clear image may improve the user's experience of viewing the image.

Further, if the voice instruction does not include the preset keyword, the voice instruction may be recognized by the recognition model to obtain the shooting intention of the voice instruction, and the shooting intention recognized by the recognition model may be instructing to shoot a clear image or instructing to shoot a non-clear image. For example, if the user's voice instruction is "What does that sign say", it may be learned that the user needs to know what the specific content of the text in the image is, and therefore the shooting intention recognized by the recognition model is to shoot a clear image. If the user's voice instructions are "What is this", "Help me see what the flower in front is", or "Help me see what color that belongs to", etc., these indicate that the user only wants to know attribute information such as the name and color of the object in the image. These attribute information only require an image with a small resolution.

In the present disclosure, in one case, "recognizing whether the voice instruction includes a preset keyword, where the preset keyword is used to instruct to shoot a clear image; if yes, determining that the shooting intention of the voice instruction is to shoot a clear image; if no, performing shooting intention recognition on the voice instruction through a pre-trained recognition model to obtain the shooting intention of the voice instruction" is performed on the wearable device or the target device side. In another case, the wearable device performs recognition on whether the voice instruction includes the preset keyword, and if yes, determines that the shooting intention of the voice instruction is to shoot a clear image; if no, sends the voice instruction to the target device, and the target device side performs shooting intention recognition on the voice instruction through the pre-trained recognition model to obtain the shooting intention of the voice instruction, and then may send the shooting intention to the wearable device, and further, the wearable device determines the target resolution based on the shooting intention, or the target device determines the target resolution based on the shooting intention.

The recognition model is pre-trained, such as an LLM (Large Language Model).

In an embodiment, the shooting instruction includes a physical operation instruction, and determining the target resolution in response to the shooting instruction includes: determining the target resolution to be the first resolution if a physical operation corresponding to the physical operation instruction is a first physical operation; and determining the target resolution to be the second resolution if a physical operation corresponding to the physical operation instruction is a second physical operation.

Further, a count of touches of the first physical operation is different from that of the second physical operation, or a touch time of the first physical operation is different from that of the second physical operation, or a touch object of the first physical operation is different from that of the second physical operation.

For example, a touch sensor is provided on the wearable device, and when the user triggers the touch sensor once, the target resolution is determined to be the first resolution. When the user triggers the touch sensor twice, the target resolution is determined to be the second resolution. For another example, if the time for which the user triggers the touch sensor is less than 3 seconds, the target resolution is determined to be the first resolution. If the time for which the user triggers the touch sensor is greater than or equal to 3 seconds, the target resolution is determined to be the second resolution. For another example, touch sensors c1 and c2 are provided on the wearable device, the target resolution is determined to be the first resolution if a touch object of the user's first physical operation is the touch sensor c1, and the target resolution is determined to be the second resolution if a touch object of the user's second physical operation is the touch sensor c2.

In summary, in the present disclosure, different first physical operations and second physical operations may be provided to determine the corresponding target resolution.

In an embodiment, determining the target resolution in response to the shooting instruction includes: determining the target resolution to be the first resolution if the shooting instruction is a physical operation instruction, and determining the target resolution to be the second resolution if the shooting instruction is a voice instruction; or determining the target resolution to be the second resolution if the shooting instruction is a physical operation instruction, and determining the target resolution to be the first resolution if the shooting instruction is a voice instruction.

It may be understood that in one case, if the user needs an image with a large resolution (such as the first resolution), shooting may be triggered through the physical operation instruction, and if the user needs an image with a small resolution (such as the second resolution), shooting may be triggered through the voice instruction. In another case, if the user needs an image with a small resolution (such as the second resolution), shooting may be triggered through the physical operation instruction, and if the user needs an image with a large resolution (such as the first resolution), shooting may be triggered through the voice instruction.

In the present disclosure, whether the physical operation instruction corresponds to the first resolution or the second resolution, and whether the voice instruction corresponds to the first resolution or the second resolution may be preset, or may be adjusted according to user habits, which is not limited herein.

In summary, in the present disclosure, the corresponding target resolution may be determined based on the shooting instruction.

S202, controlling the camera to shoot a first image with the target resolution for a current environment.

In the present disclosure, in one case, the wearable device includes one camera, and the camera may shoot images with different resolutions, for example, the camera may shoot images with the first resolution and may also shoot images with the second resolution. If the target resolution is the first resolution, the camera is controlled to shoot the first image with the first resolution, and if the target resolution is the second resolution, the camera is controlled to shoot the first image with the second resolution.

In one case, the wearable device includes two cameras, and the two cameras shoot images with the same resolution. For example, the wearable device is a headphone, which includes a left ear and a right ear, and each of the left ear and the right ear has a camera, where each of the left ear and the right ear may shoot images with the first resolution and the second resolution, and the left ear and the right ear may simultaneously shoot images with the same resolution. If the target resolution is the first resolution, the cameras of the left ear and the right ear are controlled to shoot the first image with the first resolution, and if the target resolution is the second resolution, the cameras of the left ear and the right ear are controlled to shoot the first image with the second resolution. For example, the cameras of the left ear and the right ear are the same.

In one case, the wearable device includes two cameras, and the two cameras shoot images with different resolutions. For example, the wearable device is a headphone, which includes a left ear and a right ear, and each of the left ear and the right ear has a camera. If the left ear may shoot an image with the first resolution and the right ear may shoot an image with the second resolution, the camera of the left ear is controlled to shoot the first image if the target resolution is the first resolution, and the camera of the right ear is controlled to shoot the first image if the target resolution is the second resolution. If the left ear may shoot an image with the second resolution and the right ear may shoot an image with the first resolution, the camera of the right ear is controlled to shoot the first image if the target resolution is the first resolution, and the camera of the left ear is controlled to shoot the first image if the target resolution is the second resolution.

In the embodiment of the present disclosure, the wearable device has the capability of shooting images with different resolutions, and may determine the target resolution based on the shooting instruction, and then shoot the first image with the target resolution. If the current scene requires an image with a large resolution, it may be determined, through the shooting instruction, to shoot the first image with the first resolution, so as to improve the user's visual experience, and the detail content in the first image may also be recognized. If the current scene requires an image with a small resolution, it may be determined, through the shooting instruction, to shoot the first image with the second resolution, and when the first image is transmitted, the latency may be reduced.

Fig. 3 is a flowchart of an image processing method provided by an embodiment of the present disclosure. The image processing method is applied to a wearable device, and may include the following steps.

S301, determining a target resolution in response to a shooting instruction when a user wears the wearable device.

For the specific implementation process of this step, refer to S201, which will not be repeated here.

S302, controlling the camera to shoot a first image with the target resolution and a second image, wherein the first image and the second image are both for a current environment.

If the target resolution is a first resolution (that is, a resolution of the first image is the first resolution), a resolution of the second image is a second resolution; and if the target resolution is the second resolution (that is, a resolution of the first image is the second resolution), a resolution of the second image is the first resolution.

In the present disclosure, regardless of what the shooting instruction is, the first image and the second image with different resolutions are both shot, and in addition, the shooting instruction is used to determine the target resolution of the image sent to the target device.

Further, in one case, the wearable device includes one camera, and the camera may shoot images with different resolutions, for example, the camera may shoot images with the first resolution and may also shoot images with the second resolution. If the target resolution is the first resolution, the camera is controlled to shoot the first image with the first resolution and the second image with the second resolution, and if the target resolution is the second resolution, the camera is controlled to shoot the first image with the second resolution and the second image with the first resolution.

In one case, the wearable device includes two cameras, and the two cameras shoot images with the same resolution. For example, the wearable device is a headphone, which includes a left ear and a right ear, and each of the left ear and the right ear has a camera, where both the left ear and the right ear may shoot images with the first resolution and the second resolution, and the left ear and the right ear simultaneously shoot images with the same resolution. If the target resolution is the first resolution, the cameras of the left ear and the right ear are controlled to both shoot the first image with the first resolution and the second image with the second resolution, and if the target resolution is the second resolution, the cameras of the left ear and the right ear are controlled to both shoot the first image with the second resolution and the second image with the first resolution.

In one case, the wearable device includes two cameras, and the two cameras shoot images with different resolutions. For example, the wearable device is a headphone, which includes a left ear and a right ear, and each of the left ear and the right ear has a camera. If the left ear may shoot an image with the first resolution and the right ear may shoot an image with the second resolution, the camera of the left ear is controlled to shoot the first image and the camera of the right ear is controlled to shoot the second image if the target resolution is the first resolution, and the camera of the right ear is controlled to shoot the first image and the camera of the left ear is controlled to shoot the second image if the target resolution is the second resolution. If the left ear may shoot an image with the second resolution and the right ear may shoot an image with the first resolution, the camera of the right ear is controlled to shoot the first image and the camera of the left ear is controlled to shoot the second image if the target resolution is the first resolution, and the camera of the left ear is controlled to shoot the first image and the camera of the right ear is controlled to shoot the second image if the target resolution is the second resolution.

S303, sending the first image to a target device.

It may be understood that the resolution of the image sent to the target device is the target resolution, which is determined based on the shooting instruction. For example, the wearable device shoots an image with the first resolution and an image with the second resolution, and if it is determined, based on the shooting instruction, that the target resolution is the first resolution, the image with the first resolution is sent to the target device, where the image is also the first image with the first resolution. **If** it is determined, based on the shooting instruction, that the target resolution is the second resolution, the image with the second resolution is sent to the target device, and the image is the first image with the second resolution.

Further, the first image sent to the target device may be used for the user to browse or input into the recognition model for processing, which is not limited herein.

In the present disclosure, the target device may be a terminal device or a server, which is not limited herein.

In an embodiment, the shooting instruction is a voice instruction, and the method further includes: sending the voice instruction and the first image to the target device; receiving a reply voice from the target device for the voice instruction, where the reply voice is content related to the first image; and playing the reply voice. When the wearable device includes two cameras, and the two cameras shoot two first images with the same resolution, two first images or one of the two first images may be sent to the target device. When the wearable device shoots only one first image, the first image is sent to the target device.

Further, after receiving the first image and the voice instruction, the target device may process the first image and the voice instruction using a language model to obtain the reply voice.

In summary, in the present disclosure, the first image and the second image with different resolutions may be shot, and the target resolution is determined based on the shooting instruction, and further, the first image with the target resolution is sent to the target device.

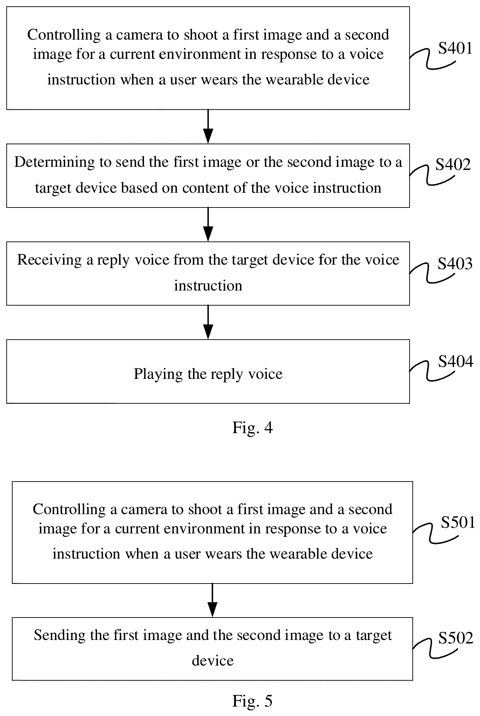

Fig. 4 is a flowchart of an image processing method provided by an embodiment of the present disclosure. The image processing method is applied to a wearable device, and may include the following steps.

S401, controlling a camera to shoot a first image and a second image for a current environment in response to a voice instruction when a user wears the wearable device.

After the voice instruction is received, the camera is controlled to shoot the first image and the second image with different resolutions, for example, the first image with a first resolution and the second image with a second resolution are shot, or the first image with the second resolution and the second image with the first resolution are shot.

S402, determining to send the first image or the second image to a target device based on content of the voice instruction.

In the embodiment of the present disclosure, if the content of the voice instruction indicates a need for a clear image, an image with a larger resolution in the first image and the second image is sent to the target device. If the content of the voice instruction indicates a need for a non-clear image, an image with a smaller resolution in the first image and the second image is sent to the target device.

For example, the first image has the first resolution, and the second image has the second resolution. If the content of the voice instruction is "a clear image is needed", the first image is sent to the target device, and if the content of the voice instruction is "a normal image is needed", the second image is sent to the target device.

S403, receiving a reply voice from the target device for the voice instruction.

The reply voice is content related to the first image or the second image. It may be understood that if the first image is sent to the target device, the reply voice is content related to the first image, and if the second image is sent to the target device, the reply voice is content related to the second image.

S404, playing the reply voice.

In the embodiment of the present disclosure, the wearable device includes a speaker, and the speaker may be used to play the reply voice. For example, the user's voice instruction is "What is the flower in front", the second image may be sent to the target device, and after recognizing the second image, the target device determines a name of the flower in the second image, sends the name to the wearable device, and the wearable device plays the name.

In summary, in the present disclosure, the first image and the second image with different resolutions may be shot, and the first image or the second image is determined to be sent to the target device based on the content of the user's voice instruction, so as to obtain the reply voice returned by the target device for replying to the user.

Fig. 5 is a flowchart of an image processing method provided by an embodiment of the present disclosure. The image processing method is applied to a wearable device, and may include the following steps.

S501, controlling a camera to shoot a first image and a second image for a current environment in response to a voice instruction when a user wears the wearable device.

For the specific implementation process of this step, refer to S401, which will not be repeated here.

S502, sending the first image and the second image to a target device.

In the embodiment of the present disclosure, the first image and the second image may be sent to the target device. The first image and the second image are images with different resolutions for the same environment. For example, the first image has a first resolution and the second image has a second resolution, or the first image has the second resolution and the second image has the first resolution.

In the present disclosure, the target device may obtain images with different resolutions, which may then be applied in different scenarios. For example, if the user needs to view the image, the image with the larger resolution may be displayed, and if the user needs to recognize details in the current environment, the image with the larger resolution may be recognized, and if the user needs to recognize attribute information such as a name, a shape, or a color of an object in the current environment, the image with the smaller resolution may be recognized.

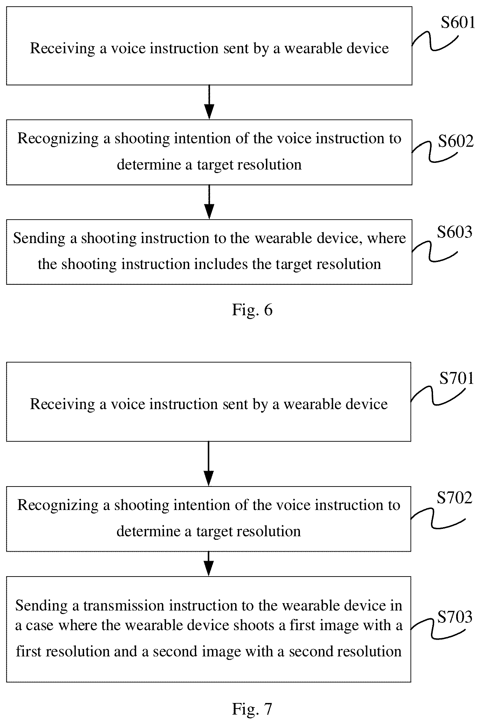

Fig. 6 is a flowchart of an image processing method provided by an embodiment of the present disclosure. The image processing method is applied to a target device, and may include the following steps.

S601, receiving a voice instruction sent by a wearable device.

It may be understood that the wearable device sends the voice instruction to the target device after receiving the voice instruction from the user.

S602, recognizing a shooting intention of the voice instruction to determine a target resolution.

The target resolution is a first resolution or a second resolution, and the first resolution is greater than the second resolution.

Recognizing the shooting instruction of the voice instruction to determine the target resolution includes: recognizing a shooting intention of the voice instruction; determining the target resolution to be the first resolution if the shooting intention represents shooting a clear image; and determining the target resolution to be the second resolution if the shooting intention does not represent shooting a clear image.

Further, recognizing the shooting intention of the voice instruction includes: recognizing whether the voice instruction includes a preset keyword, where the preset keyword is used to instruct to shoot a clear image; if yes, determining that the shooting intention of the voice instruction is to shoot a clear image; if no, performing shooting intention recognition on the voice instruction through a pre-trained recognition model to obtain the shooting intention of the voice instruction.

For the specific implementation process of this step, refer to the relevant steps in S201, which will not be repeated here.

S603, sending a shooting instruction to the wearable device, where the shooting instruction includes the target resolution.

The shooting instruction is used to control the wearable device to shoot a first image with the target resolution.

After determining the target resolution, the target device sends the shooting instruction to the wearable device, and the shooting instruction may control the wearable device to shoot the first image with the target resolution.

For the specific implementation process of this step, refer to S202, which will not be repeated here.

In summary, in the present disclosure, the target device may determine the target resolution based on the user's voice instruction, and then control the wearable device to shoot the first image with the target resolution.

Fig. 7 is a flowchart of an image processing method provided by an embodiment of the present disclosure. The image processing method is applied to a target device, and may include the following steps.

S701, receiving a voice instruction sent by a wearable device.

For the specific implementation process of this step, refer to S601, which will not be repeated here.

S702, recognizing a shooting intention of the voice instruction to determine a target resolution.

For the specific implementation process of this step, refer to the relevant content of S201, which will not be repeated here.

S703, sending a transmission instruction to the wearable device when the wearable device shoots a first image with a first resolution and a second image with a second resolution.

The transmission instruction is used to instruct the wearable device to send a first target image to the target device, where if the target resolution is the first resolution, the first target image is the first image, and if the target resolution is the second resolution, the first target image is the second image.

It may be understood that in the present disclosure, the wearable device shoots the first image and the second image with different resolutions, and the target device may send the transmission instruction to the wearable device based on the determined target resolution, and the transmission instruction may include the target resolution, and the wearable device may determine to send the image with the target resolution to the target device based on the target resolution in the transmission instruction.

Further, after receiving the first target image, the target device may display the first target image, or determine a reply voice related to the first target image based on the user's voice, and send it to the wearable device for playing.

Further, the method further includes: receiving the first image and the second image sent by the wearable device, where the first image and the second image are obtained by shooting for the same environment, and the first image and the second image have different resolutions; displaying a second target image, where the second target image is an image with a smaller resolution in the first image and the second image; and displaying a third target image in response to a preset operation of a user on the second target image, where the third target image is an image with a larger resolution in the first image and the second image. The preset operation may be clicking, for example, the user clicks on the second target image, and the preset operation may also be zooming in, for example, the user performs a zoom-in operation on the second target image.

It may be understood that the wearable device may send both the first image and the second image with different resolutions to the target device, and the target device displays the image with the smaller resolution, and after the user clicks on the image with the smaller resolution, the image with the larger resolution is displayed.

In summary, in the present disclosure, the target device may recognize the user's voice instruction, and then control the wearable device to shoot and transmit the image, so that the wearable device may be applied in various scenarios.

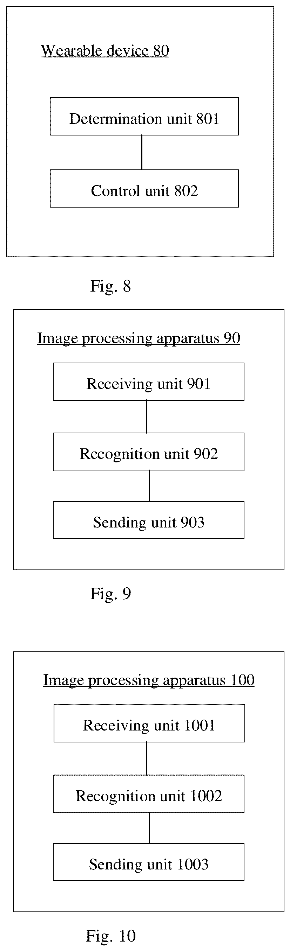

Fig. 8 is a schematic structural diagram of a wearable device provided by an embodiment of the present disclosure. The wearable device 80 includes a camera, and may include the following units: a determination unit 801, configured to determine a target resolution in response to a shooting instruction when a user wears the wearable device; a control unit 802, configured to control the camera to shoot a first image with the target resolution for a current environment, where the target resolution is a first resolution or a second resolution, and the first resolution is greater than the second resolution.

In an optional embodiment, the shooting instruction includes a voice instruction, and the determination unit 801 is further configured to: recognize a shooting intention of the voice instruction in response to the voice instruction; determine the target resolution to be the first resolution if the shooting intention represents shooting a clear image; and determine the target resolution to be the second resolution if the shooting intention does not represent shooting a clear image.

In an optional embodiment, when recognizing the shooting intention of the voice instruction, the determination unit 801 is further configured to: recognize whether the voice instruction includes a preset keyword, where the preset keyword is used to instruct to shoot a clear image; if yes, determine that the shooting intention of the voice instruction is to shoot a clear image; if no, perform shooting intention recognition on the voice instruction through a pre-trained recognition model to obtain the shooting intention of the voice instruction.

In an optional embodiment, the shooting instruction includes a physical operation instruction, and the determination unit 801 is further configured to: determine the target resolution to be the first resolution if a physical operation corresponding to the physical operation instruction is a first physical operation; and determine the target resolution to be the second resolution if a physical operation corresponding to the physical operation instruction is a second physical operation.

In an optional embodiment, a number of touches of the first physical operation is different from that of the second physical operation, or a touch time of the first physical operation is different from that of the second physical operation, or a touch object of the first physical operation is different from that of the second physical operation.

In an optional embodiment, the determination unit 801 is further configured to: determine the target resolution to be the first resolution if the shooting instruction is a physical operation instruction, and determine the target resolution to be the second resolution if the shooting instruction is a voice instruction; or determine the target resolution to be the second resolution if the shooting instruction is a physical operation instruction, and determine the target resolution to be the first resolution if the shooting instruction is a voice instruction.

In an optional embodiment, the control unit 802 is further configured to obtain a second image when controlling the camera to shoot the first image in response to the shooting instruction, where: if the target resolution is the first resolution, the second image has the second resolution; and if the target resolution is the second resolution, the second image has the first resolution.

In an optional embodiment, the shooting instruction is a voice instruction, and the wearable device further includes: a sending unit (not shown), configured to send the voice instruction and the first image to a target device; a receiving unit (not shown), configured to receive a reply voice from the target device for the voice instruction, where the reply voice is content related to the first image; and a playing unit (not shown), configured to play the reply voice.

In an optional embodiment, the sending unit (not shown) is further configured to send the first image and the second image to the target device.

For the specific implementation process of the wearable device provided by the embodiment of the present disclosure, refer to the embodiment of the image processing method, which will not be repeated here.

Fig. 9 is a schematic structural diagram of an image processing apparatus provided by an embodiment of the present disclosure. The image processing apparatus 90 is applied to a target device, and specifically includes the following units: a receiving unit 901, configured to receive a voice instruction sent by a wearable device; a recognition unit 902, configured to recognize a shooting intention of the voice instruction to determine a target resolution, wherein the target resolution is a first resolution or a second resolution, and the first resolution is greater than the second resolution; and a sending unit 903, configured to send a transmission instruction to the wearable device, wherein the shooting instruction comprises the target resolution, and the shooting instruction is used to control the wearable device to shoot a first image with the target resolution.

For the specific implementation process of the image processing apparatus provided by the embodiment of the present disclosure, refer to the embodiment of the image processing method, which will not be repeated here.

Fig. 10 is a schematic structural diagram of an image processing apparatus provided by an embodiment of the present disclosure. The image processing apparatus 100 is applied to a target device, and specifically includes the following units: a receiving unit 1001, configured to receive a voice instruction sent by a wearable device; a recognition unit 1002, configured to recognize a shooting intention of the voice instruction to determine a target resolution; and a sending unit 1003, configured to send a transmission instruction to the wearable device when the wearable device shoots a first image with a first resolution and a second image with a second resolution, where the transmission instruction is used to instruct the wearable device to send a first target image to the target device, where if the target resolution is the first resolution, the first target image is the first image, and if the target resolution is the second resolution, the first target image is the second image.

In an optional embodiment, the receiving unit 1001 is further configured to receive the first image and the second image sent by the wearable device, where the first image and the second image are obtained by shooting for a same environment, and the first image and the second image have different resolutions; the image processing apparatus 100 further includes a first display unit (not shown), configured to display a second target image, where the second target image is an image with a smaller resolution in the first image and the second image; and a second display unit (not shown), configured to display a third target image in response to a click operation of a user on the second target image, where the third target image is an image with a larger resolution in the first image and the second image.

For the specific implementation process of the image processing apparatus provided by the embodiment of the present disclosure, refer to the embodiment of the image processing method, which will not be repeated here.

In order to achieve the above embodiments, an embodiment of the present disclosure further provides a computer-readable storage medium, where a computer-executable instruction is stored in the computer-readable storage medium, and when the computer-executable instruction is executed by a processor, the image processing method according to any of the above embodiments is implemented.

In order to achieve the above embodiments, an embodiment of the present disclosure further provides a computer program product, including a computer program, where when the computer program is executed by a processor, the image processing method according to any of the above embodiments is implemented.

In order to achieve the above embodiments, an embodiment of the present disclosure further provides an electronic device, including: a processor and a memory; the memory stores a computer-executable instruction; and the processor executes the computer-executable instruction stored in the memory, to cause the processor to execute the image processing method according to any of the above embodiments.

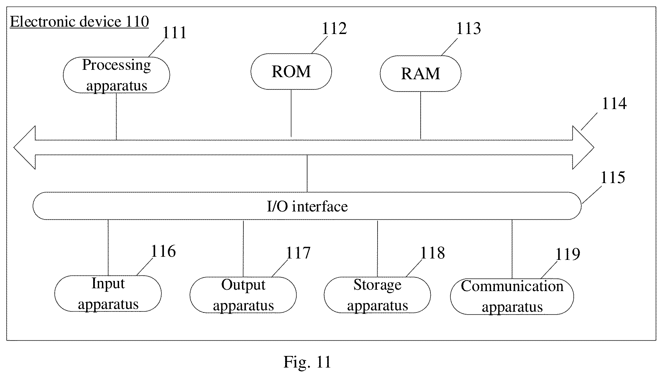

Fig. 11 is a schematic structural diagram of an electronic device provided by an embodiment of the present disclosure. The electronic device 110 may be an electronic device or a server. The electronic device may include, but is not limited to, mobile terminals such as a mobile phone, a notebook computer, a digital broadcast receiver, a personal digital assistant (PDA), a tablet computer, a portable media player (PMP), and an in-vehicle terminal (such as an in-vehicle navigation terminal), and fixed terminals such as a digital TV and a desktop computer. The electronic device shown in Fig. 11 is only an example, and should not impose any limitation on the function and scope of use of the embodiments of the present disclosure.

As shown in Fig. 11, the electronic device 110 may include a processing apparatus (e.g., a central processing unit, a graphics processor, etc.) 111, which may perform various appropriate actions and processing according to a program stored in a read-only memory (ROM) 112 or a program loaded from a storage apparatus 118 into a random-access memory (RAM) 113. The RAM 113 further stores various programs and data required for the operation of the electronic device 110. The processing apparatus 111, the ROM 112, and the RAM 113 are interconnected by means of a bus 114. An input/output (I/O) interface 115 is also connected to the bus 114.

Usually, the following apparatus may be connected to the I/O interface 115: an input apparatus 116 including, for example, a touch screen, a touchpad, a keyboard, a mouse, a camera, a microphone, an accelerometer, and a gyroscope; an output apparatus 117 including, for example, a liquid crystal display (LCD), a speaker, and a vibrator; a storage apparatus 118 including, for example, a magnetic tape and a hard disk; and a communication apparatus 119. The communication apparatus 119 may enable the electronic device 110 to perform wireless or wired communication with other devices to exchange data. Although Fig. 11 shows the electronic device 110 having various apparatuses, it should be understood that it is not required to implement or provide all of the illustrated apparatuses. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program includes program code for performing the method shown in the flowchart. In such an embodiment, the computer program may be downloaded and installed from a network via the communication apparatus 119, or installed from the storage apparatus 118, or installed from the ROM 112. When the computer program is executed by the processing apparatus 111, the preceding functions defined in the method of the embodiments of the present disclosure are executed.

It should be noted that the preceding computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier wave, and computer-readable program code is carried therein. This propagated data signal may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code contained on the computer-readable medium may be transmitted in any suitable medium, including, but not limited to, a wire, an optical cable, an RF (radio frequency), or any suitable combination thereof.

The preceding computer-readable medium may be contained in the preceding electronic device, or may exist alone without being assembled into the electronic device.

The preceding computer-readable medium carries one or more programs, which, when executed by the electronic device, cause the electronic device to perform the method shown in the preceding embodiments.

The computer program code for performing the operations of the present disclosure may be written in one or more programming languages or a combination thereof. The preceding programming languages include object-oriented programming languages such as Java, Smalltalk, and C++, and further include conventional procedural programming languages such as "C" language or similar programming languages. The program code may be completely executed on a target user computer, partially executed on a target user computer, executed as an independent software package, partially executed on a target user computer and partially executed on a remote computer, or completely executed on a remote computer or server. In the scenario involving the remote computer, the remote computer may be connected to the target user computer through any kind of network, including a local area network (LAN) or a wide area network (WAN), or may be connected to an external computer (for example, connected through the Internet with the aid of an Internet service provider).

The flowchart and block diagrams in the drawings illustrate the possibly implemented architectures, functions, and operations of the system, the method, and the computer program product according to various embodiments of the present disclosure. In this regard, each block in the flowchart or block diagrams may represent a module, program segment, or part of code, which includes one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagrams and/or the flowchart, and a combination of the blocks in the block diagrams and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit does not constitute a limitation on the unit itself under certain circumstances. For example, the first obtaining unit may also be described as "a unit for obtaining at least two internet protocol addresses".

The functions described above herein may be at least partially performed by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logic device (CPLD), etc.

In the context of the present disclosure, a machine-readable medium may be a tangible medium that may contain or store a program for use by or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to a first aspect, one or more embodiments of the present disclosure provide an image processing method, where the method is applied to a wearable device, the wearable device includes a camera, and the method includes: determining a target resolution in response to a shooting instruction when a user wears the wearable device; and controlling the camera to shoot a first image with the target resolution for a current environment, where the target resolution is a first resolution or a second resolution, and the first resolution is greater than the second resolution.

According to one or more embodiments of the present disclosure, the shooting instruction includes a voice instruction, and determining the target resolution in response to the shooting instruction includes: recognizing a shooting intention of the voice instruction in response to the voice instruction; determining the target resolution to be the first resolution if the shooting intention represents shooting a clear image; and determining the target resolution to be the second resolution if the shooting intention does not represent shooting a clear image.

According to one or more embodiments of the present disclosure, recognizing the shooting intention of the voice instruction includes: recognizing whether the voice instruction includes a preset keyword, where the preset keyword is used to instruct to shoot a clear image; if yes, determining that the shooting intention of the voice instruction is to shoot a clear image; and if no, performing shooting intention recognition on the voice instruction through a pre-trained recognition model to obtain the shooting intention of the voice instruction.

According to one or more embodiments of the present disclosure, the shooting instruction includes a physical operation instruction, and determining the target resolution in response to the shooting instruction includes: determining the target resolution to be the first resolution if a physical operation corresponding to the physical operation instruction is a first physical operation; and determining the target resolution to be the second resolution if a physical operation corresponding to the physical operation instruction is a second physical operation.

According to one or more embodiments of the present disclosure, a number of touches of the first physical operation is different from that of the second physical operation, or a touch time of the first physical operation is different from that of the second physical operation, or a touch object of the first physical operation is different from that of the second physical operation.

According to one or more embodiments of the present disclosure, determining the target resolution in response to the shooting instruction includes: determining the target resolution to be the first resolution if the shooting instruction is a physical operation instruction, and determining the target resolution to be the second resolution if the shooting instruction is a voice instruction; or determining the target resolution to be the second resolution if the shooting instruction is a physical operation instruction, and determining the target resolution to be the first resolution if the shooting instruction is a voice instruction.

According to one or more embodiments of the present disclosure, in response to the shooting instruction, the camera is controlled to shoot the current environment, and a second image is further obtained, where: if the target resolution is the first resolution, the second image has the second resolution; and if the target resolution is the second resolution, the second image has the first resolution.

According to one or more embodiments of the present disclosure, the shooting instruction is a voice instruction, and the method further includes: sending the voice instruction and the first image to a target device; receiving a reply voice from the target device for the voice instruction, where the reply voice is content related to the first image; and playing the reply voice.

According to one or more embodiments of the present disclosure, the method further includes: sending the first image and the second image to the target device.

According to a second aspect, one or more embodiments of the present disclosure provide an image processing method, where the method is applied to a target device, and the image processing method includes: receiving a voice instruction sent by a wearable device; recognizing a shooting intention of the voice instruction to determine a target resolution, where the target resolution is a first resolution or a second resolution, and the first resolution is greater than the second resolution; and sending a shooting instruction to the wearable device, where the shooting instruction includes the target resolution, and the shooting instruction is used to control the wearable device to shoot a first image with the target resolution.

According to a third aspect, one or more embodiments of the present disclosure provide an image processing method, where the method is applied to a target device, and the image processing method includes: receiving a voice instruction sent by a wearable device; recognizing a shooting intention of the voice instruction to determine a target resolution; and sending a transmission instruction to the wearable device in a case where the wearable device shoots a first image with a first resolution and a second image with a second resolution, where the transmission instruction is used to instruct the wearable device to send a first target image to the target device, where if the target resolution is the first resolution, the first target image is the first image, and if the target resolution is the second resolution, the first target image is the second image.

According to one or more embodiments of the present disclosure, the method further includes: receiving the first image and the second image sent by the wearable device, where the first image and the second image are obtained by shooting for a same environment, and the first image and the second image have different resolutions; displaying a second target image, where the second target image is an image with a smaller resolution in the first image and the second image; and displaying a third target image in response to a click operation of a user on the second target image, where the third target image is an image with a larger resolution in the first image and the second image.

According to a fourth aspect, one or more embodiments of the present disclosure provide a wearable device, where the wearable device includes a camera, and further includes: a determination unit, configured to determine a target resolution in response to a shooting instruction when a user wears the wearable device; and a control unit, configured to control the camera to shoot a first image with the target resolution for a current environment, where the target resolution is a first resolution or a second resolution, and the first resolution is greater than the second resolution.

According to a fifth aspect, one or more embodiments of the present disclosure provide an image processing apparatus, where the apparatus is applied to a target device, and the apparatus includes: a receiving unit, configured to receive a voice instruction sent by a wearable device; a recognition unit, configured to recognize a shooting intention of the voice instruction to determine a target resolution; and a sending unit, configured to send a transmission instruction to the wearable device in a case where the wearable device shoots a first image with a first resolution and a second image with a second resolution, where the transmission instruction is used to instruct the wearable device to send a first target image to the target device, where if the target resolution is the first resolution, the first target image is the first image, and if the target resolution is the second resolution, the first target image is the second image.

According to a sixth aspect, one or more embodiments of the present disclosure provide an image processing apparatus, where the apparatus is applied to a target device, and the apparatus includes: a receiving unit, configured to receive a voice instruction sent by a wearable device; a recognition unit, configured to recognize a shooting intention of the voice instruction to determine a target resolution; and a sending unit, configured to send a transmission instruction to the wearable device in a case where the wearable device shoots a first image with a first resolution and a second image with a second resolution, where the transmission instruction is used to instruct the wearable device to send a first target image to the target device, where if the target resolution is the first resolution, the first target image is the first image, and if the target resolution is the second resolution, the first target image is the second image.

According to a seventh aspect, one or more embodiments of the present disclosure provide an electronic device, including: at least one processor and a memory; the memory stores a computer-executable instruction; and the at least one processor executes the computer-executable instruction stored in the memory, to cause the at least one processor to execute various possible designed image processing methods according to the first aspect to the third aspect.

According to an eighth aspect, one or more embodiments of the present disclosure provide a computer-readable storage medium, where a computer-executable instruction is stored in the computer-readable storage medium, and when the computer-executable instruction is executed by a processor, various possible designed image processing methods according to the first aspect to the third aspect are implemented.

According to a ninth aspect, one or more embodiments of the present disclosure provide a computer program product, including a computer program, where when the computer program is executed by a processor, various possible designed image processing methods according to the first aspect to the third aspect are implemented.

The preceding description is merely illustration of preferred embodiments of the present disclosure and applied technical principles. Those skilled in the art should understand that the scope of disclosure involved in the present disclosure is not limited to the technical solutions formed by specific combinations of the preceding technical features, and shall also cover other technical solutions formed by any combination of the preceding technical features or equivalent features thereof without departing from the preceding concept of disclosure. For example, the preceding features and the technical features provided in the present disclosure (but not limited thereto) with similar functions may be replaced each other to form a technical solution.

Furthermore, although the operations are depicted in a specific order, this should not be construed as requiring that such operations should be performed in the specific order shown or in a sequential order. Under certain circumstances, multitasking and parallel processing may be advantageous. Similarly, although several specific implementation details are included in the preceding discussions, these should not be construed as limiting the scope of the present disclosure. Certain features described in the context of separate embodiments may also be implemented in a single embodiment in combination. Conversely, various features described in the context of a single embodiment may also be implemented in a plurality of embodiments individually or in any suitable sub-combinations.

Although the subject matter has been described in terms specific to structural features and/or method logical actions, it should be understood that the subject matter defined in the appended claims is not necessarily limited to the specific features or actions described above. Conversely, the specific features and actions described above are merely exemplary forms of implementing the claims.

## Claims

1. An image processing method, wherein the method is applied to a wearable device (11), the wearable device (11) comprises a camera, and the image processing method comprises:
determining a target resolution in response to a shooting instruction; and
controlling the camera to shoot a first image (a1) with the target resolution for a current environment, wherein the target resolution is a first resolution or a second resolution, and the first resolution is greater than the second resolution.

2. The image processing method of claim 1, wherein the shooting instruction comprises a voice instruction, and determining the target resolution in response to the shooting instruction comprises:
recognizing a shooting intention of the voice instruction in response to the voice instruction;
determining the target resolution to be the first resolution if the shooting intention represents shooting a clear image; and
determining the target resolution to be the second resolution if the shooting intention does not represent shooting a clear image.

3. The image processing method of claim 2, wherein recognizing the shooting intention of the voice instruction comprises:
recognizing whether the voice instruction comprises a preset keyword, wherein the preset keyword is used to instruct to shoot a clear image;
if yes, determining that the shooting intention of the voice instruction is to shoot a clear image;
if no, performing shooting intention recognition on the voice instruction through a pre-trained recognition model to obtain the shooting intention of the voice instruction.

4. The image processing method of any one of claims 1 to 3, wherein the shooting instruction comprises a physical operation instruction, and determining the target resolution in response to the shooting instruction comprises:
determining the target resolution to be the first resolution if a physical operation corresponding to the physical operation instruction is a first physical operation; and
determining the target resolution to be the second resolution if a physical operation corresponding to the physical operation instruction is a second physical operation.

5. The image processing method of claim 4, wherein a count of touches of the first physical operation is different from that of the second physical operation, or
a touch time of the first physical operation is different from that of the second physical operation, or
a touch object of the first physical operation is different from that of the second physical operation.

6. The image processing method of claim 1, wherein determining the target resolution in response to the shooting instruction comprises:
determining the target resolution to be the first resolution in response to the shooting instruction being a physical operation instruction, and determining the target resolution to be the second resolution in response to the shooting instruction being a voice instruction; or
determining the target resolution to be the second resolution in response to the shooting instruction being a physical operation instruction, and determining the target resolution to be the first resolution in response to the shooting instruction being a voice instruction.

7. The image processing method of any one of claims 1 to 6, wherein a second image (a2) is further obtained when controlling the camera to shoot the first image (a1) in response to the shooting instruction;
if the target resolution is the first resolution, the second image (a2) has the second resolution; and
if the target resolution is the second resolution, the second image (a2) has the first resolution.

8. The image processing method of claim 7, wherein the shooting instruction is a voice instruction, and the image processing method further comprises:
sending the voice instruction and the first image (a1) to a target device;
receiving a reply voice from the target device for the voice instruction, wherein the reply voice is content related to the first image (a1); and
playing the reply voice.

9. The image processing method of claim 7 or 8, further comprising:
sending the first image (a1) and the second image (a2) to a target device.

10. An image processing method, wherein the image processing method is applied to a target device, and the image processing method comprises:
receiving a voice instruction sent by a wearable device (11);
recognizing a shooting intention of the voice instruction to determine a target resolution, wherein the target resolution is a first resolution or a second resolution, and the first resolution is greater than the second resolution; and
sending a shooting instruction to the wearable device (11), wherein the shooting instruction comprises the target resolution, and the shooting instruction is used to control the wearable device (11) to shoot a first image (a1) with the target resolution.

11. The image processing method of claim 10, further comprising:
sending a transmission instruction to the wearable device (11), wherein the transmission instruction is used to instruct the wearable device (11) to send the first image (a1) as a first target image to the target device.

12. The image processing method of claim 11, further comprising:
receiving a second image (a2) sent by the wearable device (11), wherein the first image (a1) and the second image (a2) are obtained by shooting for a same environment, and the first image (a1) and the second image (a2) have different resolutions;
displaying a second target image, wherein the second target image is an image with a smaller resolution in the first image (a1) and the second image (a2); and
displaying a third target image in response to a preset operation of a user on the second target image, wherein the third target image is an image with a larger resolution in the first image (a1) and the second image (a2).

13. A wearable device (11), comprising:
a camera,
a determination unit (801), configured to determine a target resolution in response to a shooting instruction when a user wears the wearable device (11); and
a control unit (802), configured to control the camera to shoot a first image with the target resolution for a current environment, wherein the target resolution is a first resolution or a second resolution, and the first resolution is greater than the second resolution.

14. An electronic device, comprising: a processor and a memory,
wherein the memory stores a computer-executable instruction, and
when the computer-executable instruction is executed by the processor, the image processing method of any one of claims 1 to 12 is implemented.

15. A computer-readable storage medium, wherein a computer-executable instruction is stored in the computer-readable storage medium, and when the computer-executable instruction is executed by a processor, the image processing method of any one of claims 1 to 12 is implemented.
